# FASCICULE DE BREVET EUROPEEN

(11) **EP 0 888 955 B1**
(45) Date de publication et mention de la délivrance du brevet: **04.09.2002**
(21) Numéro de dépôt: 98401621.2
(22) Date de dépôt: 29.06.1998
(51) Int. Cl.: B62D 33/04

(54) **Elément de paroi de véhicule à palplanches et véhicule ayant une paroi à palplanches**
Wandelement für ein Fahrzeug mit Spundwänden , und Fahrzeug aufgebaut mit Spundwänden
Sidewall-element for a vehicle with sheet piles and vehicle constructed with sheet-piles

(30) Priorité: 30.06.1997 FR 9708222
(43) Date de publication de la demande: 07.01.1999
(73) Titulaire: GENERAL TRAILERS FRANCE, 91042 Evry (FR)
(72) Inventeur: Wante, Guy, 62117 Brebieres (FR); Gressier, Christophe, 59251 Allennes-les-Marais (FR)
(74) Mandataire: Michelet, Alain

(56) Documents cités:
- EP-A- 0 607 575
- FR-A- 1 369 730
- US-A- 4 004 373
- US-A- 4 222 606
- US-A- 4 455 807

## Description

L'invention concerne un élément pour former une paroi de véhicule à palplanches, une paroi de véhicule à palplanches ainsi qu'un véhicule ayant au moins une paroi à palplanches.

Dans le domaine de la construction de véhicules utilitaires, on utilise la technique des palplanches pour former au moins une partie des parois d'une caisse de véhicule. Selon cette technique, chaque paroi à palplanches est obtenue par emboîtement d'une pluralité d'éléments les uns dans les autres. Chaque paire d'éléments emboîtés présente sur chacune de ses faces opposées correspondant aux faces extérieure et intérieure de la paroi de la caisse de véhicule, une ligne de jonction. Cette ligne de jonction est une limite jusqu'à laquelle les deux éléments emboîtés se recouvrent.

Une jonction par emboîtement étant ouverte, par opposition à une jonction fermée, par exemple par soudure, cette ligne de jonction est aussi une ouverture que réalisent, vers l'extérieur, les deux parties des éléments emboîtés, qui se recouvrent.

Ces ouvertures réparties sur les deux faces opposées d'une paroi à palplanches, permettent à tout liquide et à l'humidité de pénétrer entre deux éléments emboîtés et de se propager par l'effet de capillarité.

Cette caractéristique désavantageuse de la technique des palplanches entraîne des problèmes aussi bien pendant la fabrication de la paroi que pendant son utilisation en tant que paroi d'une caisse de véhicules.

En effet, lors de la fabrication de la paroi à palplanches, il est nécessaire de préparer la paroi, après assemblage, au traitement de surface, par exemple à l'application d'une peinture, par un dégraissage à l'acide. Par l'effet de capillarité produit entre les parties emboîtées, une certaine quantité d'acide reste emprisonnée entre les parties emboîtées et risque de produire des effets nuisibles ou engendrer une réduction de la qualité du traitement de surface.

De même, lors de l'utilisation du véhicule, et notamment lors d'un transport de produits humides, un liquide peut entrer entre les éléments emboîtés et rester entre les parties qui se recouvrent par l'effet de capillarité.

Dans un cas comme dans l'autre, il est difficile, voire impossible, ce chasser le liquide retenu entre les parties emboîtées.

Le but de l'invention est de remédier à ces inconvénients.

Plus particulièrement, l'invention doit permettre d'éliminer le liquide entré par la jonction entre deux éléments emboîtés.

Avantageusement l'invention doit permettre de réduire le plus possible la quantité de liquide entré ou même empêcher tout accès de liquide aux parties qui se recouvrent.

Des éléments destinés à former une paroi de véhicule à palplanches avec d'autres éléments par emboîtement les uns dans les autres sont connus des documents EP-A-0.607.575 et US-A-4,004,373. Ces éléments sont formés de façon à s'encliqueter les uns dans les autres et ne présentent pas de canal d'évacuation.

Le but de l'invention est atteint par un élément destiné à former une paroi de véhicule à palplanches avec d'autres éléments par emboîtement les uns dans les autres le long d'une ligne de jonction, l'élément étant pourvu de deux bords destinés à l'emboîtement de profils complémentaires, respectivement mâle et femelle.

Conformément à l'invention, les profils complémentaires de l'élément forment, après emboîtement, un canal d'évacuation s'étendant parallèlement à la ligne de jonction.

Ce canal d'évacuation permet à la fois de chasser tout liquide qui a pu pénétrer entre les éléments emboîtés et de limiter la profondeur de pénétration en constituant une barrière par rupture de capillarité.

Dans la pratique, la disposition de l'invention permet aussi bien pendant la fabrication de la paroi que pendant l'utilisation d'un véhicule équipé de la paroi, d'appliquer un gaz sous pression tel de l'air comprimé le long de la jonction entre des éléments emboîtés et, en surmontant la force de capillarité sur la distance entre la ligne de jonction et le canal, de chasser le liquide vers le canal par lequel le liquide est évacué.

L'invention concerne également les caractéristiques ci-après considérées isolément ou selon toutes leurs combinaisons techniquement possibles.

Avantageusement, les profils complémentaires forment, après emboîtement, deux canaux d'évacuation s'étendant chacun sur l'une des faces opposées d'un profil.

Selon cette disposition, l'un ou l'autre des deux profils complémentaires d'une jonction de deux éléments emboîtés l'un dans l'autre est formé sur ses deux faces opposées et en regard de l'autre profil de façon à constituer, avec cet autre profil, deux canaux. Ces canaux sont ainsi situés sur respectivement l'un et l'autre des deux côtés des éléments emboîtés. Cette disposition correspond à la mise en place d'un canal d'évacuation du côté intérieur et de l'autre canal du côté extérieur de la paroi d'un véhicule.

Cette disposition est particulièrement avantageuse dans la mesure où elle permet non seulement de chasser tout fluide pendant la fabrication de la paroi, mais de chasser ultérieurement, lors des travaux d'entretien du véhicule, tout liquide ou humidité ayant trouvé son chemin par la ligne de jonction entre les profils complémentaires, que ce soit de l'extérieur ou de l'intérieur du véhicule.

Le canal d'évacuation, ou au moins l'un des canaux d'évacuation, s'étend à proximité de la ligne de jonction.

Le canal d'évacuation, ou les deux canaux d'évacuation, peuvent être formés par une rainure pratiquée dans l'un ou l'autre des profils complémentaires.

Avantageusement, le canal, ou au moins un des canaux s'étend, sur toute la longueur de la jonction représentée par la ligne de jonction.

Cette disposition correspond au mode de réalisation le plus fréquent. Toutefois, il est concevable que le canal, ou au moins un des canaux, ne s'étende pas sur la longueur entière de la jonction. Dans ce cas, il est important de former le canal au point le plus bas de façon qu'un écoulement du liquide chassé soit possible.

Les parois à palplanches sont habituellement utilisées pour former des parois latérales d'un véhicule. Toutefois, il est également concevable que cette technique soit appliquée au plancher du véhicule. Dans ce cas, les canaux d'évacuation peuvent être reliés à un autre canal ou une gouttière de façon que le liquide chassé puisse être collecté et évacué par des moyens appropriés, le cas échéant après avoir mis le plancher en pente.

L'élément de l'invention peut être formé comme une pièce unique ou comme une pièce composée de deux parties emboîtées elles-mêmes l'une dans l'autre.

La réalisation de l'élément de l'invention en une seule pièce ou comme pièce unique, facilite l'assemblage des éléments pour former une paroi à palplanches. On met les éléments en place l'un à la suite de l'autre et on les emboîte les uns dans les autres. Toutefois, cette opération nécessite que tous les éléments soient mis en place dans un sens prédéterminé afin que tous les profils mâles soient orientés dans la même direction et, en conséquence, tous les profils femelles soient orientés dans la direction opposée. De plus, cette disposition fixe l'ensemble des éléments dans leur orientation pour une même paroi. Il n'est donc pas possible, dans cette disposition, de présenter l'un ou l'autre des éléments indifféremment tête en haut, tête en bas ou, respectivement, face extérieure, face intérieure.

Pour obtenir cette liberté de choix du positionnement des éléments, il faut recourir à la disposition alternative selon laquelle l'élément est formé comme une pièce composée. Dans ce cas, l'élément est composé d'une première partie présentant, aux deux bords destinés à l'emboîtement, l'un des deux profils complémentaires, et d'une seconde partie présentant, aux deux bords destinés à l'emboîtement, l'autre des deux parties complémentaires. Cette disposition selon laquelle chacun des bords d'une partie destinés à l'emboîtement est pourvu d'un profil de même type, respectivement mâle ou femelle, peut être intéressante dans les cas où les faces extérieure et intérieure de la paroi à former sont de la même nature ou structure.

Le but de l'invention est atteint par une paroi de véhicule à palplanches, comprenant une pluralité d'éléments emboîtés les uns dans les autres le long des lignes de jonction, chacun des éléments étant pourvu, sur deux de ses bords destinés à l'emboîtement, de profils complémentaires respectivement mâle et femelle.

Selon l'invention, la paroi comprend une pluralité de canaux d'évacuation s'étendant parallèlement aux lignes de jonction et formés, après emboîtement, par les profils complémentaires des éléments.

Les éléments de la paroi de l'invention pouvant avoir toutes les caractéristiques des éléments de l'invention décrits plus haut, une description détaillée des caractéristiques d'une paroi selon l'invention est omise.

La paroi de l'invention peut être supportée par un profilé de support faisant partie du véhicule ou y étant rapporté. Avantageusement, ce profilé de support est formé lui-même de façon à présenter une gouttière ou un canal semblable destiné à recevoir les effluves des canaux d'évacuation de la paroi.

Le but de l'invention est atteint par un véhicule ayant au moins une paroi à palplanches formée avec une pluralité d'éléments dont les caractéristiques sont décrites plus haut.

D'autres caractéristiques et avantages de l'invention ressortiront de la description d'un mode de réalisation avantageux de l'invention donnée ci-après en référence aux dessins. Dans ces dessins, les figures représentent:
Figure 1: une vue en perspective d'un élément selon l'invention reposant sur un profilé de support.
Figure 2: une coupe transversale d'une suite d'éléments selon l'invention.
Figure 3: une variante d'une suite d'éléments selon l'invention.
Figure 4: en détail de la Figure 2, un canal d'évacuation.
Figure 5: une variante d'un canal d'évacuation.
Figure 6: une vue en perspective d'une caisse d'un véhicule, comprenant deux parois selon l'invention, et
Figure 7: une vue latérale d'une semi-remorque dont les parois latérales sont à palplanches.

Un véhicule utilitaire tel une semi-remorque est pourvu d'une caisse destinée à recevoir une charge à transporter, par exemple du sable, des pierres ou des grains de céréales. Cette caisse est formée par des parois latérales A, B à palplanches, des parois avant et arrière, éventuellement à palplanches, et d'un plancher C pourvu de profilés de support D, E recevant les parois. Chacune des parois A, B est formée d'une pluralité d'éléments 1 obtenus par emboîtement les uns dans les autres le long des lignes de jonction 2, 3 visibles respectivement sur les faces intérieures 4 et sur les faces extérieures 5 de la caisse du véhicule.

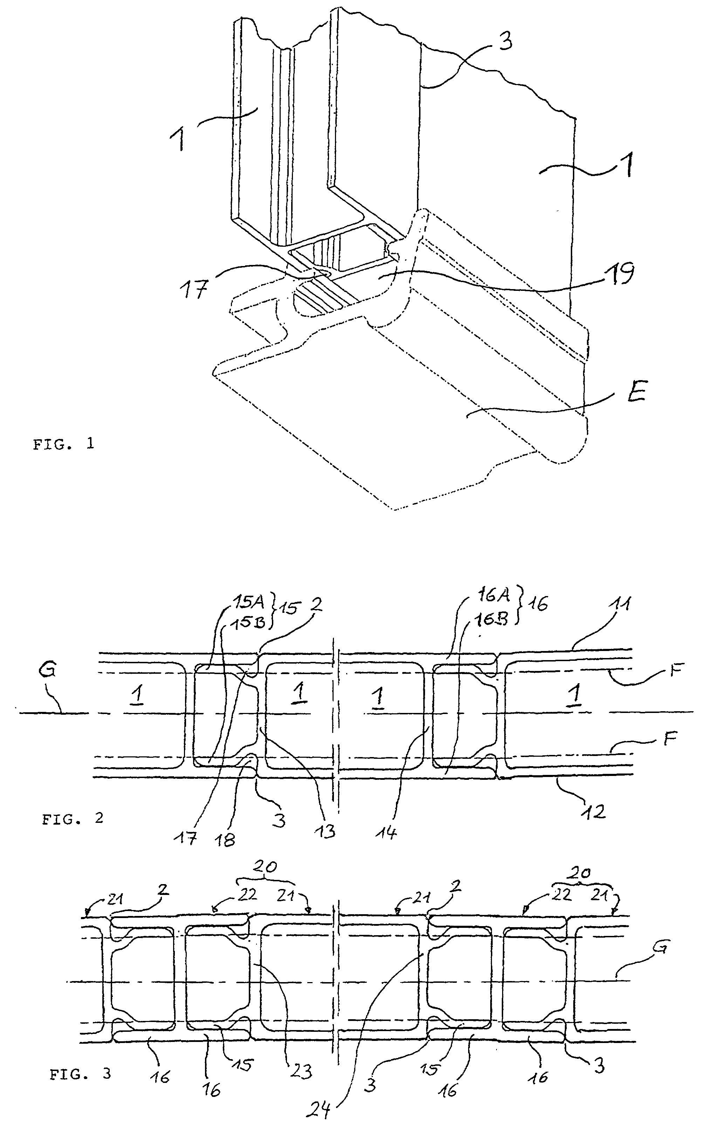

Selon le premier type de réalisation, représenté sur la Figure 2, chaque élément 1 présente deux faces 11, 12 faisant partie, après emboîtement, de la face intérieure 4 et de la face extérieure 5 d'une paroi de véhicule. Les faces 11 et 12 se terminent de part et d'autre par des bords 13 et 14 de l'élément 1, destinés à l'emboîtement de deux éléments juxtaposés 1. Alors que le bord 13 est pourvu d'un profil mâle 15, le bord 14 est pourvu d'un profil femelle 16 complémentaire au profil 15. Lors de l'emboîtement de deux éléments 1, les profils 15 et 16 glissent l'un dans l'autre. Après emboîtement, la jonction entre deux éléments 1 adjacents est repérée sur une face par la ligne de jonction 2 et sur la face opposée par la ligne de jonction 3.

Les profils complémentaires 15, 16 sont formés par des ailes essentiellement planes référencées respectivement 15A, 15B pour le profil 15 et 16A, 16B pour le profil 16. Les ailes essentiellement planes 15A, 15B, 16A, 16B s'étendent au moins sur leur plus grande partie, le long d'un plan F sensiblement parallèle à un plan médian G des éléments 1 parallèlement à la paroi . La distance d₁ entre les ailes 15A, 15B mesurée entre les faces orientées vers l'extérieur du profil 15 correspond sensiblement à la distance d₂ entre les ailes 16A, 16B mesurée sur les faces du profil 16 en regard l'une de l'autre. Dans ce qui suit, les tolérances de fabrication et la différence nécessaire entre les deux distances d₁, d₂, faible mais nécessaire pour pouvoir emboîter un élément dans l'autre, notamment en prenant en compte le matériau en lequel les éléments 1 sont réalisés, sont omises pour ne pas encombrer la description.

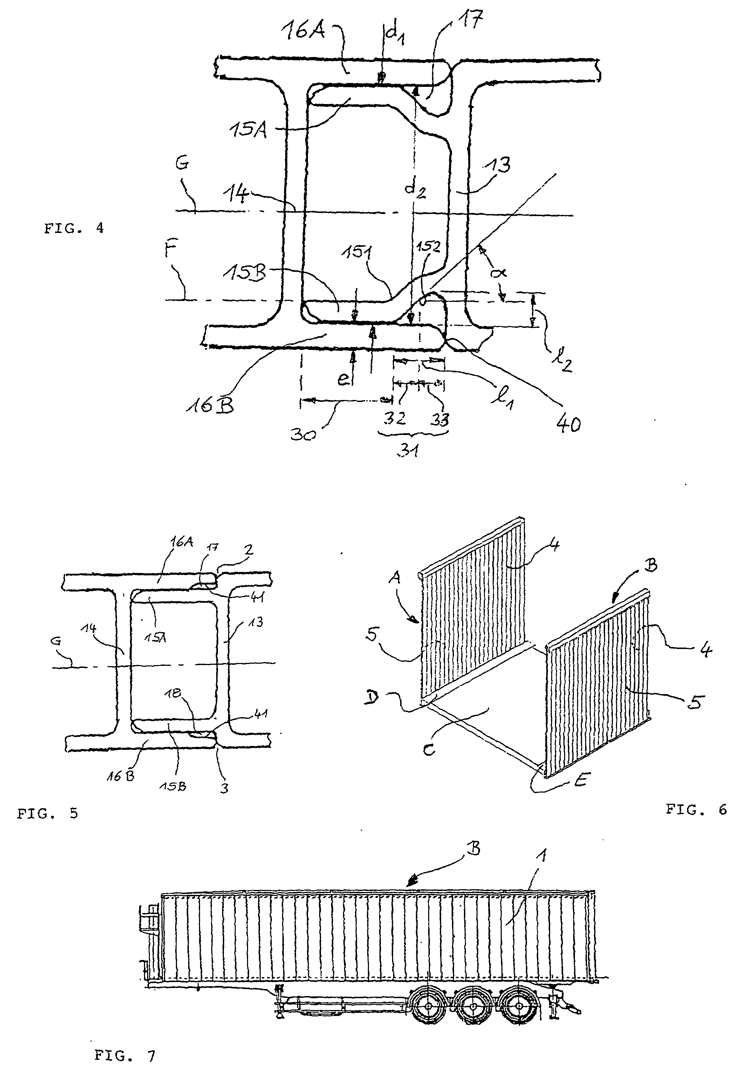

La forme des ailes 15A, 15B diffère de celle des ailes planes 16A, 16B en ce que l'aile 15B - et de façon symétrique, l'aile 15A également - présente une partie 30 sensiblement plane et une partie 31 en courbe. Alors que la partie 30 s'étend sensiblement parallèlement au plan F, la partie 31 est orientée vers l'intérieur du profil 15. En section transversale, telle que représentée sur la Figure 4, la partie 31 s'oriente au bout de la partie 30 vers le plan médian G en formant avec le plan F un angle α.

L'aile 15B ayant une paroi 151 du côté intérieur du profil 15 et une paroi 152 du côté extérieur du profil 15, la paroi 152, dans sa partie en courbe, enferme avec des parties correspondantes du bord 13 et de l'aile 16B, un canal 18. De manière analogue, la partie en courbe de l'aide 15A forme, avec les parties correspondantes de l'aile 16A et de la paroi 13, un canal 17.

La partie 31 de l'aile 15B considérée en sa paroi 152, est constituée d'au moins deux parties 32 et 33. Alors que la partie 32 est approximativement plane, la partie 33 présente, en coupe transversale, une forme en arc de cercle. Dans le mode de réalisation représenté sur la Figure 4, la partie 33 est directement reliée au bord 13.

En variante, la partie 33 peut être suivie d'une autre partie, plane ou courbe, et constituant une partie intermédiaire entre la partie 33 et le bord 13. L'étendue de la partie intermédiaire est inférieure à celle de la partie 32.

Les canaux 17, 18 ainsi formés à proximité du bord 13 de l'élément 1 s'étendent le long de la ligne de jonction correspondante 2 ou 3. Les canaux 17, 18 s'étendent sur toute la longueur de l'élément 1 ou de la ligne de jonction 2 ou 3 et se terminent dans un canal 19 formé dans le profil de support E.

Les canaux 17, 18 sont séparés de la face correspondante 11, 12 par une jonction 40 constituée par l'extrémité libre de l'aile 16B et la partie correspondante du bord 13 sur laquelle l'extrémité libre de l'aile 16B bute. L'étendue de la jonction 40, mesurée dans le sens transversal par rapport au plan médian G dépend de la forme de l'extrémité libre de l'aile 16B et de la forme de l'extrémité du bord 13 solidaire du face 12. Dans le cas de la finition représentée sur la Figure 4, l'extrémité libre de l'aile 16B est arrondie et l'extrémité du bord 13 forme avec la face 12 un angle arrondie. Grâce à ces formes arrondies aussi bien de l'extrémité libre de l'aile 16B que de l'angle formé par le bord 13 et la face 12, l'étendue de la jonction 40 a de faibles dimensions. Un aplatissement de l'extrémité libre de l'aile 16B à lui seul ou ensemble avec un aplatissement de l'extrémité du bord 13 augmente l'étendue de la jonction 40 et augmente par cela également la distance de séparation entre le canal 18 et la face 12. Une augmentation de l'étendue de la jonction 40 correspond à un agrandissement de la partie des éléments 1 emboîtés susceptibles de produire des effets de capillarité.

A titre d'exemple purement indicatif, un canal 17 ou 18 peut avoir:
- une largeur I₁ mesurée dans le sens du plan médian G, de l'ordre de 6 mm,
- une largeur I₂ mesurée dans le sens transversal par rapport au plan médian G, de l'ordre de 3 mm,
- un angle d'orientation α de l'ordre de 45°.

L'étendue de la jonction 40 est de l'ordre de 2 mm pour une épaisseur e de l'aile 16B de 2 mm.

La disposition des canaux 17, 18 par rapport au bord 13, aussi bien que les dimensions de ces canaux peuvent varier en fonction du matériau utilisé pour la réalisation des éléments 1, et notamment en fonction des liquides à évacuer et des forces de capillarité à prendre en compte.

En variante de la conception d'un canal représenté sur la Figure 4, il est concevable que les ailes des profils 15 et 16 soient sensiblement planes sur toute leur étendue et que les ailes de l'un des deux profils complémentaires, soit les ailes 15A, 15B soit les ailes 16A, 16B ou, si la conception des profils le laisse apparaître comme plus avantageux, les ailes des deux profils complémentaires, soient pourvues d'une rainure 41. La forme de la rainure 41, vue en section transversale, est choisie de façon que le canal résultant ait une section transversale approximativement rectangulaire.

Selon le deuxième type de réalisation, représentée sur la Figure 3, chaque élément de l'invention, référencé 20, est composé de deux parties 21, 22 emboîtées l'une dans l'autre. Chacune des parties 21, 22 est pourvu, sur ses bords destinés à l'emboîtement, de profils identiques. Ainsi, la partie 21 est pourvue, sur ses deux bords 23, 24 destinés à l'emboîtement, d'un profil mâle 15 alors que la partie 22 est pourvue, sur ses deux bords destinés à l'emboîtement, de deux profils femelles 16.

La comparaison entre les deux variantes représentées sur les Figures 2 et 3 montre notamment les conséquences pour l'assemblage d'éléments 1 ou 20 pour obtenir des panneaux à palplanches selon l'invention. En effet, les éléments 1 doivent être orientés dans le même sens pour obtenir une paroi. Il n'est donc pas possible, par exemple, d'orienter une face portant un défaut d'aspect, vers l'intérieur de la caisse à assembler si la disposition des profils complémentaires ne correspond pas à celle des éléments adjacents. Contrairement à cela, la disposition selon la Figure 3 permet une telle manoeuvre, les profils de chaque partie d'un élément étant les mêmes aux deux bords destinés à l'emboîtement. De plus, la variante selon la Figure 3 permet de réaliser les deux parties 21 et 22 en deux matériaux différents ou en des matériaux semblables mais ayant des élasticités différentes.

Les signes de référence insérés après les caractéristiques techniques mentionnées dans les revendications, ont pour seul but de faciliter la compréhension de ces dernières, et n'en limitent aucunement la portée.

## Revendications

1. Elément (1) destiné à former une paroi de véhicule (A, B) à palplanches avec d'autres éléments (1) par emboîtement les uns dans les autres le long d'une ligne de jonction (2, 3), l'élément (1) étant pourvu, sur deux de ses bords (13, 14) destinés à l'emboîtement, de profils complémentaires (15, 16), respectivement mâle (15) et femelle (16), **caractérisé en ce que** les profils complémentaires (15, 16) sont formés par des ailes essentiellement planes (15A, 15B; 16A 16B) s'étendant au moins sur leur plus grande partie le long d'un plan (F) sensiblement parallèle à un plan médian (G) de l'élément (1) et **en ce que** les profils complémentaires (15, 16) forment, après emboîtement, un canal d'évacuation (17) s'étendant parallèlement à la ligne de jonction (2).

2. Elément selon la revendication 1, **caractérisé en ce que** les profils complémentaires forment, après emboîtement, deux canaux d'évacuation (17, 18) s'étendant chacun sur l'une des faces opposées d'un profil (15A, 15B).

3. Elément selon la revendication 1 ou 2, **caractérisé en ce qu'**au moins un (17) des canaux (17, 18) s'étend à proximité de la ligne de jonction (2).

4. Elément selon l'une quelconque des revendications 1 à 3, **caractérisé en ce que** l'un des profils complémentaires est pourvu d'une rainure (41) pour former le canal (17, 18).

5. Elément selon l'une quelconque des revendications 1 à 4, **caractérisé en ce que** le canal (17) s'étend sur la longueur entière de la ligne de jonction (2).

6. Elément selon l'une quelconque des revendications 1 à 5, **caractérisé en ce qu'**il est formé comme pièce unique (1), l'un des bords destinés à l'emboîtement (13, 14) étant pourvu d'un profil, mâle (15) et l'autre bord étant pourvu d'un profil femelle (16) complémentaire à l'autre.

7. Elément selon l'une quelconque des revendications 1 à 5, **caractérisé en ce qu'**il est formé comme pièce composée (20) de deux parties (21, 22) emboîtées l'une dans l'autre, chacun des bords d'une partie destinés à l'emboîtement étant pourvu d'un profil de même type respectivement mâle ou femelle selon la partie.

8. Paroi de véhicule à palplanches (A, B) comprenant une pluralité d'éléments (1) emboîtés les uns dans les autres le long des lignes de jonction (2, 3), chacun des éléments étant pourvu, sur deux de ses bords (13, 14) destinés à l'emboîtement, de profils complémentaires (15, 16), respectivement mâle (15) et femelle (16), **caractérisée en ce que** les profils complémentaires (15, 16) sont formés par des ailes essentiellement planes (15A, 15B; 16A, 16B) s'étendant au moins sur leur plus grande partie le long d'un plan (F) sensiblement parallèle à un plan médian (G) de l'élément (1) et **en ce que** la paroi (A, B) comprend une pluralité de canaux d'évacuation (17, 18) s'étendant parallèlement aux lignes de jonction (2, 3) et formés, après emboîtement, par les profils complémentaires (15, 16).

9. Paroi selon la revendication 8, **caractérisée en ce que** les canaux d'évacuation (17, 18) sont formés, après emboîtement, sur deux faces opposées des profils.

10. Paroi selon la revendication 8 ou 9, **caractérisée en ce que** les canaux d'évacuation (17, 18) s'étendent sur la longueur entière des lignes de jonction (2, 3).

11. Véhicule ayant au moins une paroi à palplanches, **caractérisé en ce que** la paroi est formée avec une pluralité d'éléments selon l'une quelconque des revendications 1 à 7.

## Patentansprüche

1. Element (1) zur Herstellung einer Fahrzeugwand (A,B) aus Spundbohlen durch gegenseitiges Zusammenstecken mit weiteren Elementen (1) entlang einer Verbindungslinie (2,3), wobei das Element (1) auf zwei seiner zum Zusammenstecken vorgesehenen Ränder (13,14) mit komplementären Profilen (15,16), jeweils einem Steckprofil (15) und einem Aufnahmeprofil (16), versehen ist,
**dadurch gekennzeichnet, dass**
die komplementären Profile (15,16) durch im wesentlichen ebene Flansche (15A,15B;16A,16B) gebildet sind, die sich wenigstens zu ihrem größten Teil entlang einer Ebene (F) im wesentlichen parallel zu einer Mittelebene (G) des Elements (1) erstrecken, und die komplementären Profile (15,16), nach dem Zusammenstecken, einen sich parallel zur Verbindungslinie (2) erstreckenden Evakuierungskanal (17) bilden.

2. Element nach Anspruch 1,
**dadurch gekennzeichnet, dass**
die komplementären Profile, nach dem Zusammenstecken, zwei Evakuierungskanäle (17,18) bilden, von denen sich jeder auf einer der gegenüberliegenden Seiten eines Profils (15A,15B) erstreckt.

3. Element nach Anspruch 1 oder 2,
**dadurch gekennzeichnet, dass**
sich mindestens ein Kanal (17) der Kanäle (17,18) in Nähe der Verbindungslinie (2) erstreckt.

4. Element nach einem der Ansprüche 1 bis 3,
**dadurch gekennzeichnet, dass**
eines der komplementären Profile mit einer Rille (41) versehen ist, um den Kanal (17,18) zu bilden.

5. Element nach einem der Ansprüche 1 bis 4,
**dadurch gekennzeichnet, dass**
sich der Kanal (17) über die Gesamtlänge der Verbindungslinie (2) erstreckt.

6. Element nach einem der Ansprüche 1 bis 5,
**dadurch gekennzeichnet, dass**
es als einstückiges Teil (1) gebildet ist, wobei einer der zur Verbindung vorgesehenen Ränder (13,14) mit einem Steckprofil (15) und der andere Rand mit einem zum anderen Profil komplementären Aufnahmeprofil (16) versehen ist.

7. Element nach einem der Ansprüche 1 bis 5,
**dadurch gekennzeichnet, dass**
es als aus von zwei zusammengesteckten Abschnitten (21,22) bestehendes Teil (20) gebildet ist, wobei jeder zum Zusammenstecken bestimmte Rand eines Abschnitts mit einem Profil derselben Art, abhängig vom jeweiligen Abschnitt mit einem Steck- oder Aufnahmeprofil, versehen ist.

8. Fahrzeugwand aus Spundbohlen (A,B) aus
mehreren Elementen (1), die entlang von Verbindungslinien (2,3) gegenseitig zusammengesteckt sind, wobei jedes der Elemente auf zwei seiner zum Zusammenstecken vorgesehenen Ränder (13,14) mit komplementären Profilen (15,16), jeweils einem Steckprofil (15) und einem Aufnahmeprofil (16), versehen ist,
**dadurch gekennzeichnet, dass**
die komplementären Profile (15,16) durch im wesentlichen ebene Flansche (15A,15B;16A,16B) gebildet sind, die sich wenigstens zu ihrem größten Teil entlang einer Ebene (F) im wesentlichen parallel zu einer Mittelebene (G) des Elements (1) erstrecken, und dass die Wand (A,B) mehrere Evakuierungskanäle (17,18) umfasst, die sich parallel zu den Verbindungslinien (2,3) erstrecken und, nach dem Zusammenstecken, von den komplementären Profilen (15,16) gebildet sind.

9. Wand nach Anspruch 8,
**dadurch gekennzeichnet, dass**
die Evakuierungskanäle (17,18), nach dem Zusammenstecken, auf zwei gegenüberliegenden Seiten der Profile gebildet sind.

10. Wand nach den Ansprüchen 8 oder 9,
**dadurch gekennzeichnet, dass**
sich die Evakuierungskanäle (17,18) über die gesamte Länge der Verbindungslinien (2,3) erstrecken.

11. Fahrzeug mit mindestens einer Wand aus Spundbohlen,
**dadurch gekennzeichnet, dass**
die Wand aus mehreren Elementen nach einem der Ansprüche 1 bis 7 gebildet ist.

## Claims

1. An element (1) intended to form a sheet piling vehicle wall (A, B) with other elements (1) by slotting them together along a junction line (2, 3), whereby the element (1) is fitted, on two of its edges (13, 14) provided for slotting complementary profiles (15, 16), respectively male (15) and female (16), **characterised in that** the complementary profiles (15, 16) are formed by essentially plane wings (15A, 15B; 16A, 16B) extending at least over their larger portion along a plane (F) substantially parallel to a medium plane (G) of the element (1) and **in that** the complementary profiles (15, 16) form, after slotting them together, an evacuation channel (17) extending parallel to the junction line (2).

2. An element according to claim 1, **characterised in that** the complementary profiles form, after being slotted together, two evacuation channels (17, 18) each extending over one of the opposite faces of a profile (15A, 15B).

3. An element according to claim 1 or 2, **characterised in that** at least one (17) of the channels (17,18) extends close to the junction line (2).

4. An element according to any of the claims 1 to 3, **characterised in that** one of the complementary profiles is fitted with a groove (41) to form the channel (17, 18).

5. An element according to any of the claims 1 to 4, **characterised in that** the channel (17) extends over the whole length of the junction line (2).

6. An element according to any of the claims 1 to 5, **characterised in that** it is formed as a single piece (1), whereas one of the edges to be slotted (13, 14) is fitted with a male profile (15) and the other with a female profile (16) that is complementary to the former.

7. An element according to any of the claims 1 to 5, **characterised in that** it is formed as a piece (20) composed of two parts (21, 22) slotted together, whereas each of the edges of a given portion intending to be slotted exhibits a profile of the same type, respectively male and female as required for the part.

8. A sheet piling vehicle wall (A, B) comprising a plurality of elements (1) slotted together along junction lines (2, 3) whereas each of the elements is fitted, on two of its edges (13, 14) intended for slotting together complementary profiles (15, 16), respectively male (15) and female (16), **characterised in that** the complementary profiles (15, 16) are formed by essentially plane wings (15A, 15B; 16A, 16B) extending at least over their larger portion along a plane (F) substantially parallel to a medium plane (G) of the element (1) and **in that** the wall (A, B) comprises a plurality of evacuation channels (17,18) extending parallel to the junction line (2, 3) and formed by the complementary profiles (15, 16), after slotting them together.

9. A wall according to claim 8, **characterised in that** the evacuation channels (17, 18) are formed, after slotting them together; on two opposite faces of the profiles.

10. A wall according to one of claims 8 or 9, **characterised in** the wall evacuation channels (17, 18) extend over the whole length of the junction lines (2, 3).

11. A vehicle having at least one sheet piling wall **characterised in that** the wall is closed with a plurality of element according to any of the claims 1 to 7.
